Europäisches Patentamt

European Patent Office

Office européen des brevets

(19)

(11) Publication number: **0 083 473**
**A1**

## EUROPEAN PATENT APPLICATION

(21) Application number: **82306393.8**

(22) Date of filing: **01.12.82**

(51) Int. Cl.³: **F 16 K 17/16**

(30) Priority: **21.12.81 GB 8138434**

(43) Date of publication of application: **13.07.83**
**Bulletin 83/28**

(84) Designated Contracting States: **DE FR GB IT**

(71) Applicant: **ELECTROFABRICATION & ENGINEERING COMPANY LIMITED, Gloucester Road West Chirton Industrial Estate, North Shields Tyne & Wear, NE29 8RQ (GB)**

(72) Inventor: **Falconer, John David, 1 Heathfield Place Melton Park, Gosforth Newcastle upon Tyne (GB)**

(74) Representative: **Sanderson, Michael John et al, MEWBURN ELLIS & CO 2/3 Cursitor Street, London EC4A 1BQ (GB)**

(54) Safety pressure relief device for pressure vessels.

(57) A safety pressure relief device for a pressure vessel includes an assembly (2) comprising a reverse bursting disc (16) having an annular flange portion (18) surrounding a dome portion (20), and a retard member (30) overlying said disc (16), said flange portion (18) and overlying portion of the retard member being located between inlet and outlet support member (36, 38). Said flange portion (18) and the overlying portion of the retard member (30) each have formed therein arcuate cuts (22, 32) extending round a substantial proportion of their circular extends, overlying hinge extents (24, 34) being formed in said flange portion (18) and retard member (30) between the ends of said cuts (22, 32). The assembly is clamped in a holder member (4, 6), the arrangement being such that, on reversal of the dome portion (20) of the disc, the parts of the disc (16) and retard member (30) radially inward of the cuts (22, 32) are withdrawn from between the support members (36, 38) and hinge about said hinge extents (24, 34).

- 1 -

# SAFETY PRESSURE RELIEF DEVICE FOR PRESSURE VESSELS

## TECHNICAL FIELD

This invention relates to safety pressure relief devices for location on pressure vessels to ensure that the pressure within the vessel does not exceed a predetermined maximum permissible value, and more particularly to such devices incorporating reverse bursting discs.

## BACKGROUND ART

In many such devices, particularly for medium and high pressure application, the movement of the disc on reversal is extremely violent and can result in loss in control of said disc subsequent to rupture.

It has been proposed to provide an arrangement in which the dome portion of the reverse bursting disc and, in certain cases, the flange portion of the disc as well are released from support members at the critical pressure, the disc as a whole, or at least the dome portion thereof, being displaced into an associated outlet bore from the vessel.

In order to prevent total displacement of the disc or dome portion into said outlet bore, however, hinge means have been provided between a part of the flange portion to be retained between the support members and the adjacent regions of the dome portion of the disc. Said regions of the dome portion of the disc then hinge about said fixed part of the flange

- 2 -

portion on reversal of said dome portion to prevent complete release of the disc from the support members.

However, in said aforementioned medium to high pressure applications, the energy available on reversal is often sufficient to break the hinge means with the result that the dome portion at least of the disc is released into the outlet bore.

It would be desirable to provide a device which, even in medium to high pressure situations, was not prone to the disc being inadvertently totally released from between its support members.

DISCLOSURE OF THE INVENTION

According to the present invention there is provided a safety pressure relief device for location on a pressure vessel, the device comprising a bursting disc assembly including a reverse bursting disc having an outer annular flange portion and a central convex-concave dome portion, a retard member having an outer annular flange portion overlying said flange portion of the bursting disc and a central portion overlying part at least of the dome portion of the bursting disc, and annular inlet and outlet support members between which the flange portions of the bursting disc and the retard member are located with the retard member to the outlet side of the bursting disc, the flange portion of each of the bursting disc and the retard member having formed therein, about a substantial proportion of their circular extent – typically of the order of 270° – an arcuate line of weakness, said lines of weakness defining radially inner and outer extents to said flange portions and, between the ends of the lines of weakness in said flange portions, substantially overlying hinge extents in each flange portion, the device further comprising a holder member so shaped that, on location of the assembly in said holder member and on the application of axial pressure to the assembly by means of said holder member, the path between the inlet and outlet faces of the disc is sealed, the application of the critical pressure to the central regions of the disc resulting in the withdrawal of said radially inner extents of the flange portions of the disc and retard member from between the support members and hinging of said disc and retard member about said hinge extents while the outer extents of said flange portions remain in position between the support members.

The arcuate lines of weakness in the flange portions of the disc and retard member preferably comprise cuts through said flange portions, although they may comprise, for example, scores or an arcuate series of perforations in the flange portions.

- 4 -

Preferably the holder member exerts axial pressure on the radially outer extent of the flange portion of the disc and on the radially outer part only of the radially inner extent of said flange portion of the disc, while it is further preferred that the radially inner extent of the flange portion of the retard member is substantially relieved of said clamping pressure.

The holder member conveniently comprises inlet and outlet holder portions each provided with a planar clamping surface engaging with the inlet and outlet support members respectively, the radially inner boundary of each clamping surface being located slightly radially inwardly of the line of weakness in the flange portion of the disc whereby the bulk of the clamping pressure is exerted on the radially outer extent of said flange portion.

Conveniently the diameter of the line of weakness in the flange portion of the retard member is slightly less than that of the line of weakness in the flange portion of the disc, although said former diameter may be the same as or slightly greater than the latter diameter.

The arcuate extents of the lines of weakness in the flange portions of the disc and the retard member, and therefore the arcuate extents of the hinge extents

- 5 -

of said two components, are conveniently substantially the same, but they may in certain circumstances differ.

The assembly preferably further includes an annular sealing gasket between the flange portion of the disc and the inlet support member and underlying the line of weakness in said flange portion.

Conveniently the disc, the retard member and the inlet and outlet support members are secured together to comprise a unitary construction, for example by means of a plurality of spot welds through the inlet and outlet support members and the radially outer extents of the flange portions of the disc and the retard member.

Preferably the outlet holder portion includes a surface the radially outer extent of which comprises said planar clamping surface and the radially inner extent of which, which is co-planar with said radially outer extent, comprises a supporting shoulder for the radially inner regions of the flange portions of the retard member and the disc during normal working conditions.

In a preferred application of the invention, the retard member comprises a flat disc, although other configurations are possible, preferably of the same material and thickness as the bursting disc. However,

- 6 -

said retard member may include a substantially central aperture therethrough to prevent any inadvertent build-up of pressure within the dome portion of the disc resulting from, for example, corrosion of said disc.

BRIEF DESCRIPTION OF THE DRAWINGS

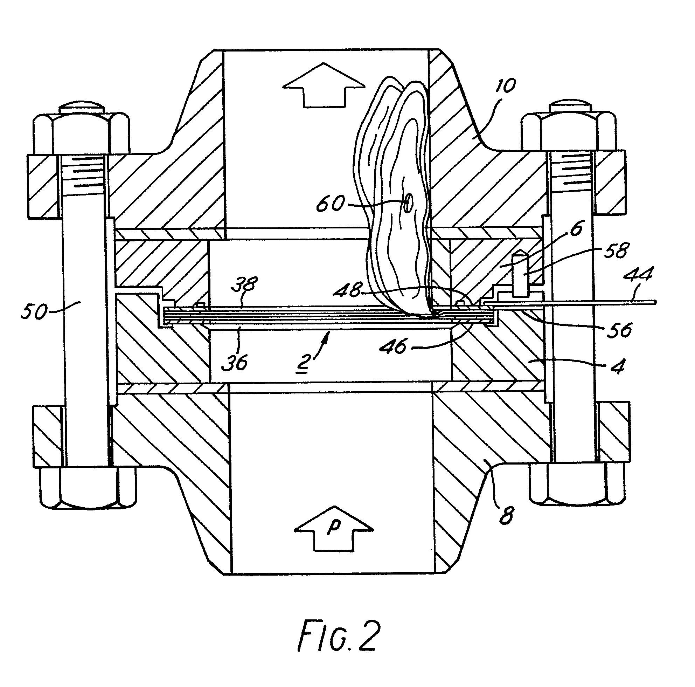

Figs. 1 and 2 show a device according to the invention clamped between inlet and outlet pipe flanges, with the disc and the retard member in their operative position and displaced position respectively;

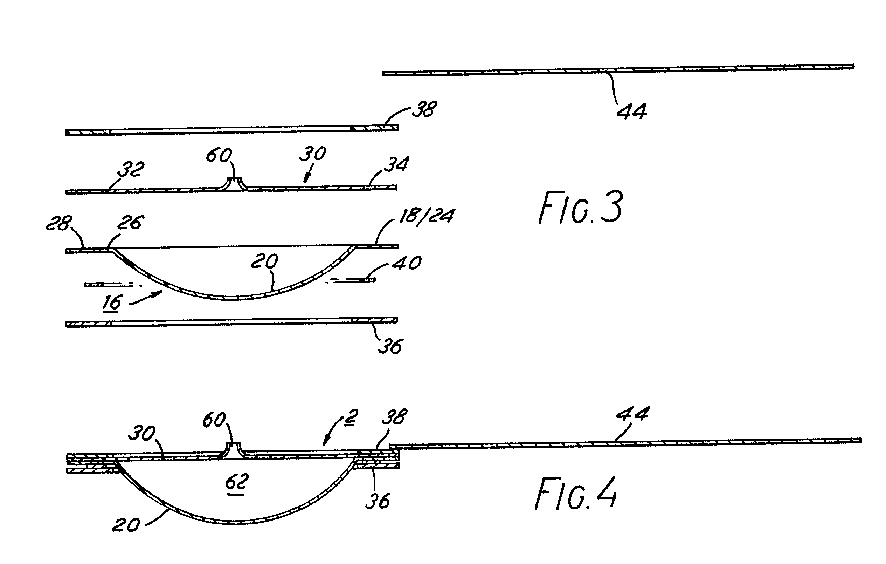

Figs. 3 and 4 are an exploded view and an integrated view of the components of the bursting disc assembly of the device of Fig. 1;

Fig. 5 is a plan view from above of the assembly of Fig. 1, and

Figs. 6 and 7 show details of the area X of Fig. 1 before and just after reversal of the disc respectively.

BEST MODE OF CARRYING OUT THE INVENTION

Referring to the drawings there is shown a safety pressure relief device including a reverse bursting disc assembly indicated generally at 2 clamped between inlet and outlet portions 4,6 of a holder member, said member itself being located between inlet and outlet pipe flanges 8,10 with sealing gaskets 12,14 positioned between the pipe flanges and the holder member.

- 7 -

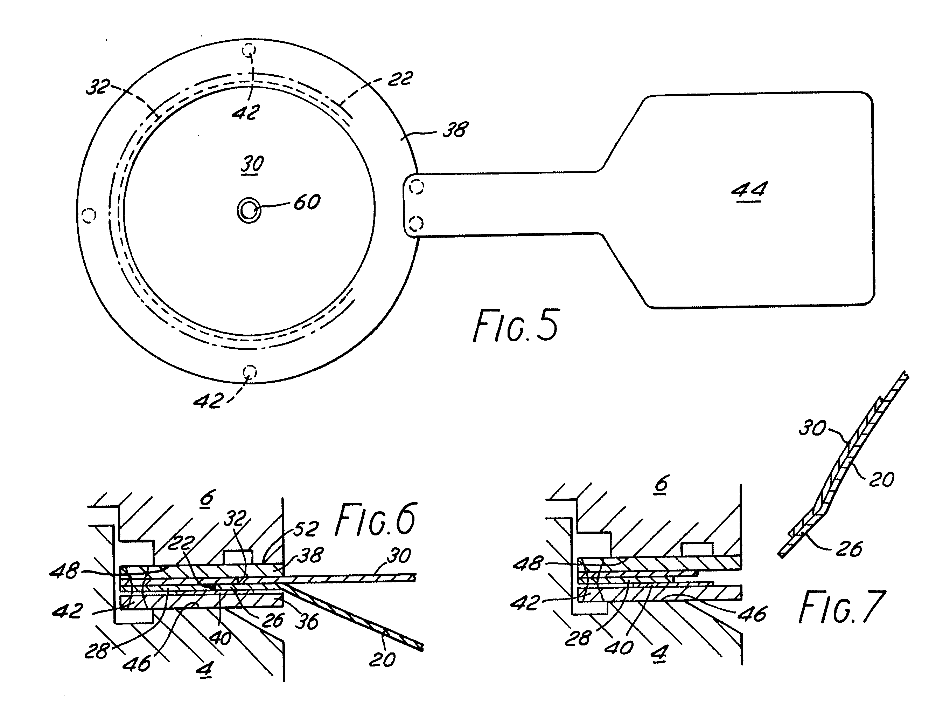

The assembly 2 comprises a reverse bursting disc 16 including an outer annular flange portion indicated at 18 and a central concave-convex dome portion 20. During its formation, the disc is domed to the required shape and a cut is then formed at a predetermined diameter in the flange portion 18 as shown in dotted lines at 22 in Fig. 5. The cut 22 extends right through and around a substantial proportion of the circular extent of the flange portion 18, typically of the order of 270°, to leave the remainder of said flange portion 18 as an uncut hinge portion 24 as will become apparent from the following description. The cut 22 effectively divides said extent of the flange portion 18 into radially inner and outer parts 26,28 respectively.

The assembly 2 further comprises a retard member in the form of a flat disc 30 preferably of similar thickness and material as the disc 2 and having the same diameter as said disc. An arcuate cut 32 is formed through the outer flange regions of said retard disc at a pre-determined diameter preferably slightly less than that of the cut 22 in the disc 2, said cut 32 also extending around a substantially corresponding proportion of the retard disc 30, again typically 270°, to leave a hinge portion 34 in the uncut region of said disc 30.

- 8 -

In the assembly 2, the retard disc 30 is located to the outlet side of the disc 2 with the cuts 22 and 32, as well as the hinge portions 24,34, circumferentially aligned. The flange portion 18 of the disc 2 and the overlying flange region of the disc 30 are sandwiched between annular inlet and outlet support rings 36,38 with a foil sealing ring 40 between the inlet support ring 36 and the flange portion 18 of the disc 2 to seal the cut 22, and the components are spot welded together as at 42 radially outwardly of the cuts 22,32.

A metal identification tag 44 is spot welded to the outlet support ring 38 at the region of the hinge portions 24,34 to extend radially outwardly of the assembly thus ensuring that the location of the hinge portions of the discs 2 and 30 can always be determined.

The holder portions 4,6 are provided with planar parallel clamping surfaces 46,48 respectively between which the assembly 2 is located, the inner boundary of the surfaces 46,48 being located slightly radially inwardly of the cut 22 but slightly radially outwardly of the cut 32 whereby, on tightening the flange bolts 50 to clamp the device in position, a clamping load is applied to the part 28 of the flange portion 18 of the disc 2 and to the outer regions only of the part 26 of said flange portion 18, while the part of the retard disc 30 between the support rings 36,38 but radially inwardly of the cut 32 is substantially relieved of clamping pressure.

The outlet holder portion 6 includes an annular shoulder 52 the inner diameter of which is identical to that of the inlet holder portion 4, the surface of said shoulder being co-planar with the clamping surface 48 to provide support for the assembly 2 under normal working conditions.

An abutment shoulder 54 is integrally formed on or secured to the outlet holder portion 6 in the region of the hinge portions 24,34 to project radially inwardly of the bore through said portion 6 to provide a controlled bend of the discs 2,30 on reversal as will be detailed below.

In order to ensure that, on location of the assembly 2 within the holder member, the hinge portions 24,34 are always aligned with the shoulder 54 on the holder member, the inlet portion 4 of the holder member is formed with a radial slot 56 through which the tag 44 extends, and the outlet portion 6 of the holder member is provided with a dependent pin 58 adapted to be received within said slot to locate the inlet and outlet holder portions 4,6 relative to one another. Thus, when the tag 44 is received within the slot 56 and when the inlet and outlet portions 4,6 are acurately located relative to one another, the hinge portions

0083473

22,32 of the discs 2,30 are radially aligned with the shoulder 54 on the outlet holder portion 6.

Although the retard disc could comprise a continuous flat member, the illustrated disc is provided with a central aperture 60 therein communicating into the volume 62 between the discs 2 and 30. Such an arrangement ensures that, in the event of inadvertent build up of pressure in the volume 62 due for example to undetected corrosion in the dome portion 20 of the disc 2, said pressure is relieved and the characteristics of the disc 2 are not affected.

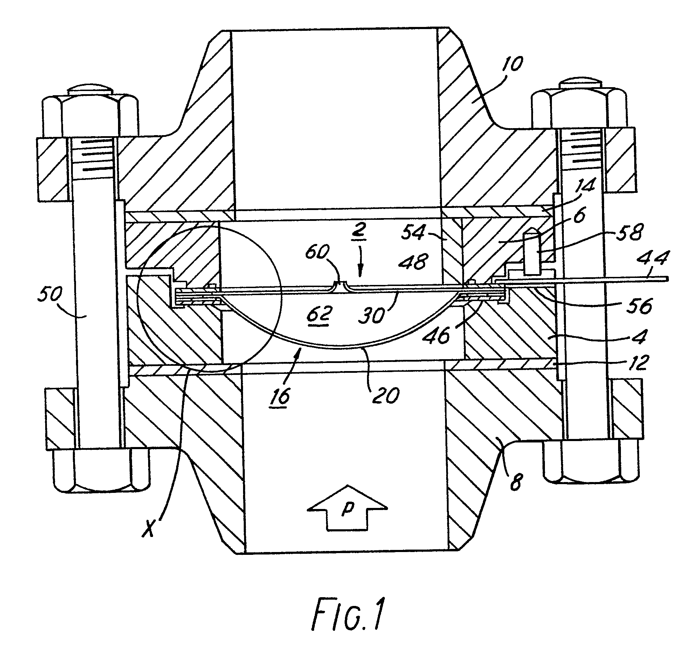

In use of the device, the assembly 2 located in its holder member 4 is positioned between the flanges 8,10 as shown in Fig. 1 and axial clamping pressure is applied to the device by tightening of the bolts 50. The nature of the assembly 2 and the construction of the holder portions 4,6 are such that the torque applied to the device, providing it is at least sufficient to locate the device in position and to effect a seal between the inlet and outlet faces of the disc 2, is not crucial to accurate operation of the device.

In medium to high pressure situations to which the described device is particularly suited, and when the pressure P applied to the convex face of the dome portion 20 of the disc 2 reaches the critical value, said dome portion reverses with violent motion.
On said reversal, however, the dome portion abuts the
retard disc 30 whereby said violent motion is dampened
but is sufficient to result in the inner part 26 of
the flange portion 18 of the disc 2 and the part of the
retard disc 30 radially inwardly of the cut 32 being
withdrawn from between the support rings 36,38 around
the extent of the cuts 22,32.  Said withdrawn parts
hinge about the extents 24,34, said hinging taking
place in a controlled manner about the fixed shoulder
54.

Thus the presence of the retard disc 30 serves to
prevent tearing of the dome portion 20 of the disc 2
away from the hinge extent of the flange portion of
the disc as might otherwise occur,  the shoulder 54
further serving to control the violent movement of the
reversing disc.

It is to be emphasised that the precise locations,
angular extents and relative radial positions of the
cuts 22,32 may be altered from those shown, while the
retard member 30 may not extend completely across the
bore to be monitored but may be of for example
substantially annular construction and not necessarily
flat.  Further, the cuts 22,32 may be replaced by, for
example, scores not extending right through the
material of the associated flange portions, or by arcuate series of perforations in said flange portions, or by other equivalent lines of weakness, all such that said lines of weakness are broken on reversal of the dome portion and the inner part 26 of the flange portion 18 of the disc 2 and the part of the retard disc 30 radially inwardly of the line of weakness therein are withdrawn from between the support rings 36,38 around the extent of the lines of weakness.

A currently preferred application of the safety pressure relief device of the invention is in a holder member of 50mm internal diameter, the disc 2 comprising 0.25mm thick stainless steel with the diameter of the cut 22 being 63mm and its angular extent being 270°. The retard disc is also of 0.25mm thick stainless steel with the cut 32 having a diameter of 59mm and an angular extent of 270°. The sealing gasket 40 is 0.01mm lead foil, the assembled device having a critical pressure of $29 \, kg/cm^2$ with a working pressure ability of up to 90% of said critical pressure.

CLAIMS

1. A safety pressure relief device for location on a pressure vessel, the device comprising a bursting disc assembly (2) including a reverse bursting disc (16) having an outer annular flange portion (18) and a central convex-concave dome portion (20), annular inlet and outlet support members (36,38) between which the flange portion (18) of the bursting disc (16) is located, and a holder member (4,6) in which the assembly (2) is clamped in an operative position, the device being characterised by a retard member (30) located between the bursting disc (16) and the outlet support member (38), said retard member (30) having an outer annular flange portion overlying the flange portion (18) of the bursting disc (16) and a central portion overlying part at least of the dome portion (20) of the bursting disc (16), the flange portion of each of the bursting disc (16) and the retard member (30) having formed therein, about a substantial proportion of their circular extents, an arcuate line of weakness (22,32), said lines of weakness (22,32) defining radially inner and radially outer extents to said proportions of the associated flange portions, and, between the ends of the lines of weakness (22,32) in said flange portions, substantially overlying hinge extents (24,34) in each flange portion, the holder member (4,6) being so shaped that, on location of the assembly in said holder member (4,6) and on the application of axial pressure to the assembly by means of the holder member (4,6), the path between the inlet and outlet faces of the disc (16) is sealed, the application of the critical pressure to the central regions (20) of the disc (16) resulting in the withdrawal of said radially inner extents of the flange portions of the disc (16) and the retard member (30) from the support members (36,38) and hinging of said disc (16) and retard member (30) about said hinge extents (24,34) while the outer extents of said flange portions remain in position between the support member (36,38).

2. A safety pressure relief device as claimed in claim 1 in which the arcuate lines of weakness in the flange portions of the disc (16) and retard members (30) comprise cuts (22,32) through said flange portions.

3. A safety pressure relief device as claimed in claim 1 or claim 2 in which the holder member (4,6) exerts axial pressure on the radially outer extent (28) of the flange portion (18) of the disc (16) and on the radially outer part only of the radially inner extent (26) of said flange portion (18) of the disc (16).

4. A safety pressure relief device as claimed in claim 3 in which the holder member (4,6) exerts axial pressure on the radially outer extent of the flange portion of the retard member (30), the radially inner extent of the flange portion of the retard member (30) being substantially relieved of said clamping pressure.

5. A safety pressure relief device as claimed in claim 3 or claim 4 in which the holder member comprises inlet and outlet holder portions (4,6) each provided with a planar clamping surface (46,48) engaging with the inlet and outlet support members (36,38) respectively, the radially inner boundary of each clamping surface (46,48) being located slightly radially inwardly of the line of weakness (22) in the flange portion (18) of the disc (16) whereby the bulk of the clamping pressure is exerted on the radially outer extent (28) of said flange portion (18) of the disc (16).

6. A safety pressure relief device as claimed in any one of claims 1 to 5 in which the diameter of the arcuate line of weakness (32) in the flange portion of the retard member (30) is slightly less than that of the line of weakness (22) in the flange portion (18) of the disc (16).

7. A safety pressure relief device as claimed in any one of claims 1 to 6 in which the arcuate extents of the lines of weakness (22,32) in the flange portions of the disc (16) and the retard member (30)

0083473

are substantially the same.

8. A safety pressure relief device as claimed in any one of claims 1 to 7 and including an annular sealing gasket (40) between the flange portion (18) of the disc (16) and the inlet support member (36) and underlying the line of weakness (22) in the flange portion (18) of the disc (16).

9. A safety pressure relief device as claimed in any one of claims 1 to 8 in which the disc (16), the retard member (30) and the inlet and outlet support members (36,38) are secured together to comprise a unitary construction.

10. A safety pressure relief device as claimed in claim 9 in which said securing together is by means of a plurality of spot welds (42) through the inlet and outlet support members (36,38) and the radially outer extents of the flange portions of the disc (16) and the retard member (30).

11. A safety pressure relief device as claimed in claim 5 and claims dependent therefrom in which the outlet holder portion (6) includes a surface the radially outer extent (48) of which comprises said planar clamping surface and the radially inner extent of which, which is co-planar with said radially outer extent (48), comprises a supporting shoulder (52) for tha radially inner regions of the flange portions of the retard member (30) and disc (16) during normal working conditions.

12.   A safety pressure relief device as claimed in any one of claims 1 to 11 in which the retard member (30) comprises a flat disc.

13.   A safety pressure relief device as claimed in claim 12 in which said flat disc includes a substantially central   aperture (60) therethrough.

FIG.1

FIG.2

44

38

32    60    30    34

FIG.3

28    26    18/24

20    40

16    36

30    60    2    38

44

20    62    36

FIG.4

FIG.7

FIG.6

FIG.5

European Patent
Office

**EUROPEAN SEARCH REPORT**

0083473
Application number

EP   82 30 6393

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-4 236 648   (WOOD et al.) | | F 16 K   17/16 |
| | --- | | |
| A | DE-A-2 934 335   (B.S. & B. SAFETY SYSTEMS) | | |
| | --- | | |
| A | DE-A-2 828 341   (BLACK, SIVALLS & BRYSON) | | |
| | --- | | |
| A | US-A-3 881 629   (SHAW et al.) | | |
| | --- | | |
| A | DE-A-2 236 373   (BLACK, SIVALLS & BRYSON) | | |
| | --- | | **TECHNICAL FIELDS SEARCHED (Int. Cl. ³)** |
| A | DE-C-1 074 349   (BLACK, SIVALLS & BRYSON) | | F 16 K   17/00 |
| | --- | | |
| A | US-A-2 716 506   (FIKE) | | |
| | ----- | | |

The present search report has been drawn up for all claims

| Place of search BERLIN | Date of completion of the search 11-03-1983 | Examiner SCHLABBACH M |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82